# EUROPEAN PATENT SPECIFICATION

(11) **EP 1 643 459 B1**
(45) Date of publication and mention of the grant of the patent: **12.08.2009**
(21) Application number: 05253489.8
(22) Date of filing: 07.06.2005
(51) Int. Cl.: G07C 9/00

(54) **Authentication system using biometric information**
Authentifikationssystem, welches biometrische Information benutzt
Système d'authentification utilisant d'informations biomètriques

(30) Priority: 30.09.2004 JP 2004287169
(43) Date of publication of application: 05.04.2006
(73) Proprietor: FUJITSU LIMITED, Kawasaki-shi, Kanagawa 211-8588 (JP)
(72) Inventor: Ito, Kimikazu, c/o Fujitsu Limited, Kawasaki-shi, Kanagawa 211-8588 (JP); Wakabayashi, Akira, c/o Fujitsu Limited, Kawasaki-shi, Kanagawa 211-8588 (JP); Miyajima, Takashi, c/o Fujitsu Limited, Kawasaki-shi, Kanagawa 211-8588 (JP)
(74) Representative: Stebbing, Timothy Charles

(56) References cited:
- WO-A-02/32045
- DE-A1- 19 857 702
- US-A1- 2004 036 574

## Description

The present invention relates to an authentication system comprising a plurality of authentication devices each of which uses biometric information.

Conventionally, an authentication device using biometric information specifying physical characteristics of an individual person such as a fingerprint, an iris, a voiceprint, a vein pattern and the like (i.e. a biometric) has been practically used. The authentication device of the above kind is used for authenticating an individual person upon unlocking a door or logging in to a computer, a mobile phone and the like, for example.

Japanese Patent Application Publication No. 3-241182 (Page 2 of SPECIFICATION and Fig. 3) discloses a technique for authenticating an individual person by using both of a fingerprint and a voiceprint as biometric information in a door opening/closing system.

Japanese Patent Application Publication No. 9-198501 (Paragraphs [0009] to [0012] of SPECIFICATION and Fig. 1) discloses an arrangement in which each of a plurality of gates is provided with a fingerprint verification device in an access management system employing fingerprint verification. In the above arrangement, personal information including fingerprint data is registered in a host apparatus. The above arrangement has an intention to realize an efficient management of the latest fingerprint data which is utilized in a higher frequency, thanks to this configuration.

Conventionally, in an authentication system comprising a plurality of authentication devices, biometric information has been registered in a server installed separately from the authentication devices as disclosed in the above Japanese Patent Application Publication No. 9-198501. However, this configuration requires a download operation from a server to an authentication device each time the authentication device performs an authentication process so that there have been problems of a heavy load on a network and of a leakage of information. Further, this configuration has included a risk that the operations of all of the authentication devices can be suspended due to some failure in the server.

US 2004/0036574 A discloses a server-based biometric access control system downloading data to access control devices.

It is therefore desirable to enhance the security of an authentication system comprising a plurality of authentication devices which devices use biometric information. It is further desirable to facilitate a registration operation of biometric information in the above authentication system.

An authentication system according to the present invention comprises a plurality of authentication devices. Each of the authentication devices comprises an obtaining unit for obtaining biometric information by input thereof, a registering unit for registering the biometric information obtained by the obtaining unit, an authenticating unit for authenticating an individual person by utilizing the biometric information registered in the registering unit, a receiving unit for receiving biometric information input in another authentication device; and a transmitting unit for transmitting the biometric information obtained by the obtaining unit, characterised in that said transmitting unit is arranged for transmitting the biometric information to another of said plurality of authentication devices, the transmitting unit transmitting the received biometric information to the next authentication device sequentially; whereby the biometric information input into any of the authentication devices is registered in all of the authentication devices or in all of a prescribed subset of the plurality of the authentication devices.

According to the present invention, biometric information input in one authentication device is registered in that same authentication device and is also transmitted to other authentication devices. Thereby, the biometric information of a user can be registered in each authentication device so that each authentication device can conduct an identity verification for a user by utilizing the biometric information registered in the device itself.

In the above authentication system, a registration admittance/exclusion setting unit for setting the admittance/exclusion of registration of biometric information for each authentication device and for each user can be further provided. In this case, the transmitting unit transmits the biometric information only to an authentication device which has gained admittance by the registration admittance/exclusion setting unit. According to this configuration, the biometric information of a user can be registered only in the desired authentication devices.

In addition, in the above authentication system, a grouping unit for grouping the plurality of the authentication devices into a plurality of groups including a first group and a second group can be further provided. In this case, the transmitting unit of an authentication device belonging to the first group, when an obtaining unit of the authentication device obtains biometric information, instantaneously transmits the biometric information to other authentication devices belonging to the first group, and transmits the biometric information to authentication devices belonging to the second group at a predetermined time. According to this configuration, biometric information is instantaneously transmitted only to a prescribed subset of the authentication devices (e.g. the authentication devices in which the information has to be registered expeditely), and the biometric information is later transmitted to other authentication devices (e.g. the authentication devices in which the information does not have to be registered expeditely). Accordingly, the congestion of the system due to transmissions of biometric information can be avoided.

According to the present invention, biometric information is transmitted among authentication devices upon registration, however, the biometric information is not output externally of each of the authentication devices upon verifying the identity of a user. Therefore, the security of an authentication system comprising a plurality of authentication devices is enhanced. Further, biometric information input via an arbitrary authentication device is transmitted to one or a plurality of other authentication devices from the first arbitrary authentication device, so that a separate server for managing biometric information is not necessary.

Reference will now be made, by way of example only, to the accompanying drawings in which:
Fig. 1 shows an authentication system in an embodiment according to the present invention;
Fig. 2 shows a configuration of an authentication device;
Fig. 3 shows a typical biometric information database;
Fig. 4 shows an example of procedures for registering biometric information in the authentication system in an embodiment according to the present invention;
Fig. 5 shows an example of a registration managing table;
Fig. 6 shows a registered state of biometric information in each of the authentication devices;
Fig. 7 is a flowchart of a procedure for registering biometric information;
Fig. 8 is a flowchart of an operation of the authentication device when receiving biometric information from other authentication device;
Fig. 9 shows another example of the procedure for registering biometric information;
Fig. 10 is a flowchart of an operation of the authentication device to which biometric information is input in the procedure shown in Fig. 9;
Fig. 11 is a flowchart of an operation of the authentication device which receives biometric information from another authentication device in the procedure shown in Fig. 9;
Fig. 12 is a flowchart of a re-registration process executed in association with a tamper resistance process;
Fig. 13A shows a configuration example of the authentication system;
Fig. 13B shows an example of a group managing table; and
Fig. 14 is a flowchart for transmitting biometric information whilst taking the grouping into account.

Embodiments of the present invention will be explained referring to the drawings. Hereinafter, an embodiment will be explained in which an authentication system according to the present invention is applied to an access management system for controlling the opening and closing of a door. However, it is to be noted that the scope of the present invention is not limited to this embodiment. For example, the present invention can be used for authenticating (verifying the identity of) an individual person upon logging in to a computer, a mobile phone and the like.

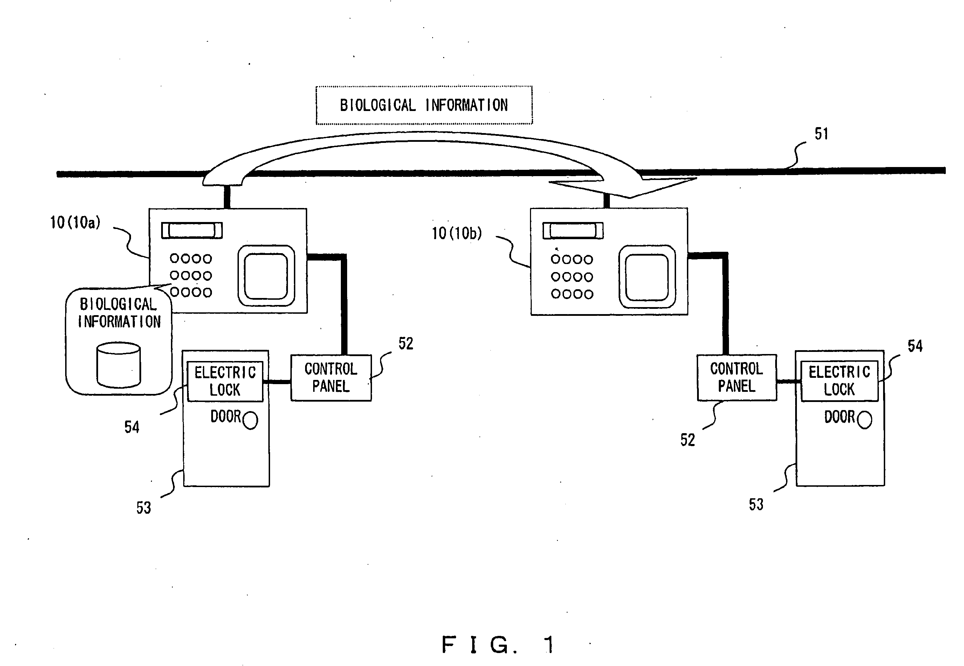

Fig. 1 shows an authentication system in an embodiment according to the present invention. An authentication system 1 of the present embodiment comprises a plurality of authentication devices 10 (10a and 10b in the example shown in fig. 1) connected with one another via a communication line 51. The communication line 51 is not limited to wired circuit but may be a wireless circuit or network.

Each of the authentication devices 10 is connected to a corresponding electric lock 54 of a door 53 via a control panel 52 in order to control the locking/unlocking of the electric lock 54. The authentication device 10 conducts an identity verification for a person trying to enter or exit a room via the door 53 (hereinafter, referred to also as "user") and if the identity verification of the user results in a success, the authentication device 10 issues an unlocking instruction to the control panel 52 so that the control panel 52 unlocks the electric lock 54 in accordance with the unlocking instruction. On the other hand, if the identity verification of the user results in a failure, the electric lock 54 is not unlocked. Also, it is needless to say that, when a prescribed period of time has elapsed or after detection of locking/unlocking of the door 53, the electric lock 54 is locked to get into a standby state for a next user's operation.

Each of the authentication devices 10 comprises a database so that the biometric information of the user is registered in advance in the database. The biometric information is electronic data specifying the physical characteristics of an individual person such as a fingerprint, an iris, a voiceprint, a vein pattern on a palm or the like, and the like. Also, the biometric information is registered by being input via an arbitrary authentication device among a plurality of the authentication devices 10 (10a in the example shown in Fig. 1). Further, the biometric information input via the arbitrary authentication device is transmitted to each of other authentication devices (10b in the example shown in Fig. 1). Thereby, the biometric information of a user is registered in each authentication device 10.

A user is subjected to an identity verification by one of the authentication devices 10 upon entering and exiting a room via the door 53. Specifically, the user inputs his or her biometric information to the authentication device 10. Then, the authentication device 10 checks the newly input biometric information with the biometric information registered beforehand. Thereafter, a control is conducted regarding the unlocking of the electric lock 54 in accordance with the result of the check.

Upon the above operation, the authentication device 10 conducts the above checking process by using the biometric information registered in the device itself. In other words, the biometric information of the user is not transmitted via the communication line 51 upon the checking process. Therefore, the possibility of information leakage is reduced so that the security is enhanced. By contrast, in a known configuration in which biometric information is registered in a server provided on a network, the possibility of the information leakage is increased due to a transmission and a reception, on the communication line, of the corresponding biometric information conducted each time of the checking process so that the security can be diminished.

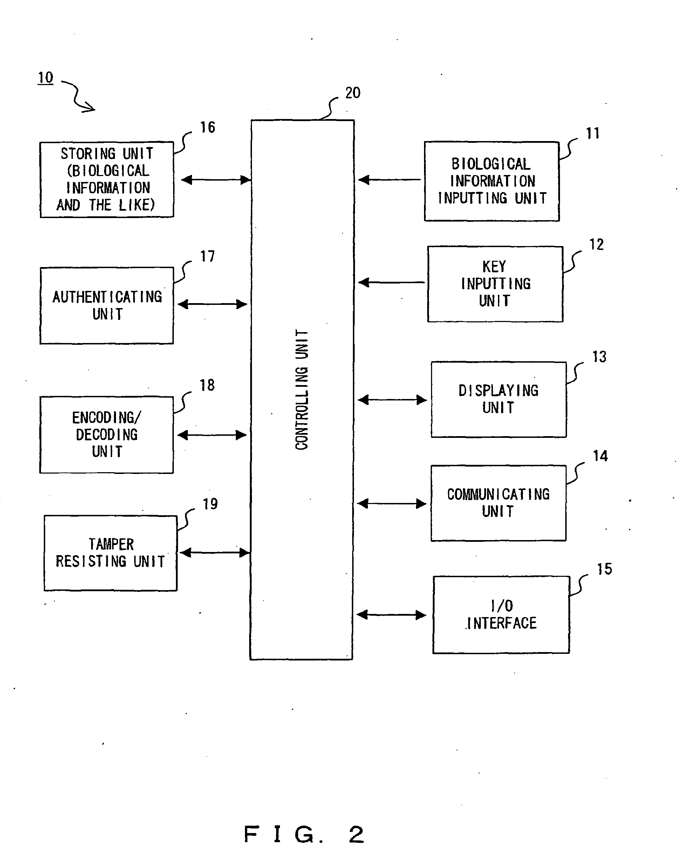

Fig. 2 shows a configuration of the authentication device 10. A biometric information inputting unit 11 is a sensor for detecting biometric information of a user. For example, when a fingerprint or a vein pattern as biometric information of a user are to be registered, the biometric information inputting unit 11 is configured to comprise an optical reading device. The biometric information inputting unit 11 requires a user to input the biometric information of the user upon registering the biometric information and upon conducting the identity verification of the user.

A key inputting unit 12 is an operation panel for receiving input of numbers, letters or the like by a user. The numbers or the like input via the key inputting unit 12 are processed by a controlling unit 20. A displaying unit 13 displays a message to be notified to a user. The displayed message is prepared by the controlling unit 20. Also, audio guidance can be output in place of displaying the massage on the displaying unit 13.

A communicating unit 14 is connected to the communication line 51 in order to transmit and receive data (including biometric data and control data) to/from other authentication devices in accordance with an instruction of the controlling unit 20. A process of communication protocol, a packet assembly/disassembly and the like are conducted by this communicating unit 14. As for the communication protocol, any kind of protocol can be employed including TCP/IP. An I/O interface 15 transmits and receives a signal to/from the control panel 52.

A storing unit 16 is a rewritable storage device for registering biometric information therein. The biometric information is registered in the storing unit 16 after being encoded by an encoding/decoding unit 18. An authenticating unit 17 checks biometric information newly input via the biometric information inputting unit 11 with biometric information registered in the storing unit 16. The encoding/decoding unit 18 encodes and decodes the biometric information.

A tamper resisting unit 19 forcibly deletes biometric information registered in the storing unit 16 when there occurs an illegal access to the authentication device 10 (especially an illegal access to the storing unit 16 such as illegal read, write, and manipulation of the biometric information or the like) or when there occurs an illegal access to a device operating in association with the authentication device 10 (the control panel 52 and the electric lock 54 in the example shown in Fig. 1) . Thereby, the leakage of the biometric information can be avoided.

The controlling unit 20 controls the entire operations of the authentication device 10 by causing the respective units 11 to 19 to operate in association with one another.

When registering biometric information in the authentication device 10, a user inputs his/her biometric information using the biometric information inputting unit 11 in accordance with a guidance message displayed on the displaying unit 13. Upon this operation, the user also inputs other personal information via the key inputting unit 12. As for the above other personal information, a registration number assigned to each individual person beforehand (for example, an employee number for an employee of a company) or the like is input.

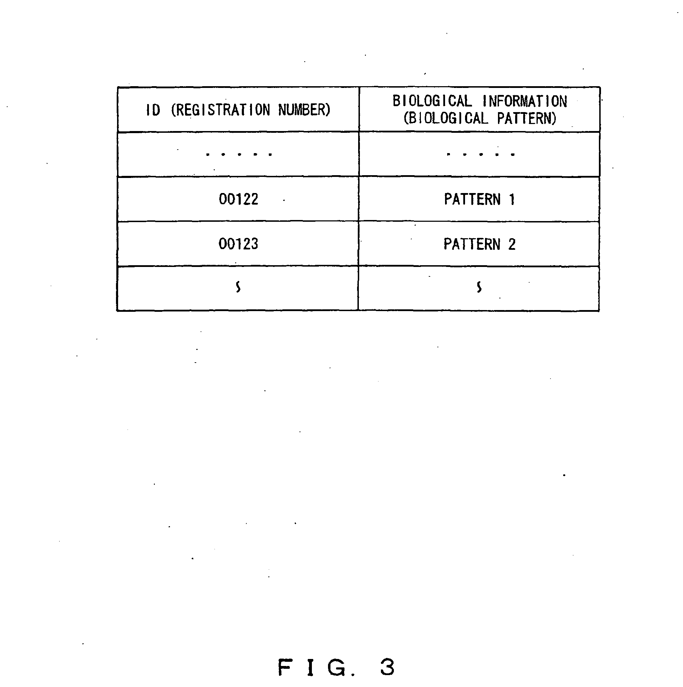

The input biometric information is encoded by the encoding/decoding unit 18 in order to be stored in the storing unit 16. Here, as shown in Fig. 3, the encoded biometric information is registered with respect to registration numbers of users, in a biometric information database 31 established in the storing device 16.

The biometric information registered as above is transmitted to other authentication devices. Specifically, the communicating unit 14 transmits the biometric information of each user stored in the storing unit 16 to one or a plurality of other authentication devices 10 via the communication line 51. Upon this operation, the biometric information is transmitted in an encoded state thereof. Also, the corresponding registration number is transmitted together with biometric information.

On the other hand, the communicating unit 14 can receive the biometric information (and the registration numbers corresponding to the biometric information) transmitted from other authentication devices via the communication line 51. And the received biometric information is registered in the local storing unit 16. As mentioned above, in the storing unit 16 of one authentication device, not only the biometric information input via the biometric information inputting unit 11 of the one authentication device itself but also the biometric information input on other authentication devices are registered.

To perform identity verification, a user inputs a registration number via the key inputting unit 12 in accordance with a guidance message displayed on the displaying unit 13, and inputs his/her biometric information by using the biometric information inputting unit 11. Then, the controlling unit 20 transmits the input biometric information to the authenticating unit 17. Also, the controlling unit 20 extracts the corresponding biometric information from the storing unit 16 using the input registration number as a search key. The biometric information extracted from the storing unit 16 is transmitted to the authenticating unit 17 after being decoded by the encoding/decoding unit 18. Thereafter, the authenticating unit 17 checks the biometric information newly input from the biometric information inputting unit 11 with the biometric information extracted from the storing unit 16, and then notifies the result of the check to the controlling unit 20.

If the identity verification by the above check results in a success, the controlling unit 20 transmits to the control panel 52 an instruction for unlocking the electric lock 54 via the I/O interface 15. Thereby, the user is allowed to enter or exit a room via the door 53. It is needless to say that, when a prescribed period of time has elapsed or after detection of locking/unlocking of the door 53, the electric lock 54 is locked to get into a standby state for a next user' s operation. On the other hand, if the identity verification results in a failure, the controlling unit 20 displays a message indicating the failure on the displaying unit 13. In other words, the electric lock 54 remains locked so that the user can neither enter nor exit the room via the door 53.

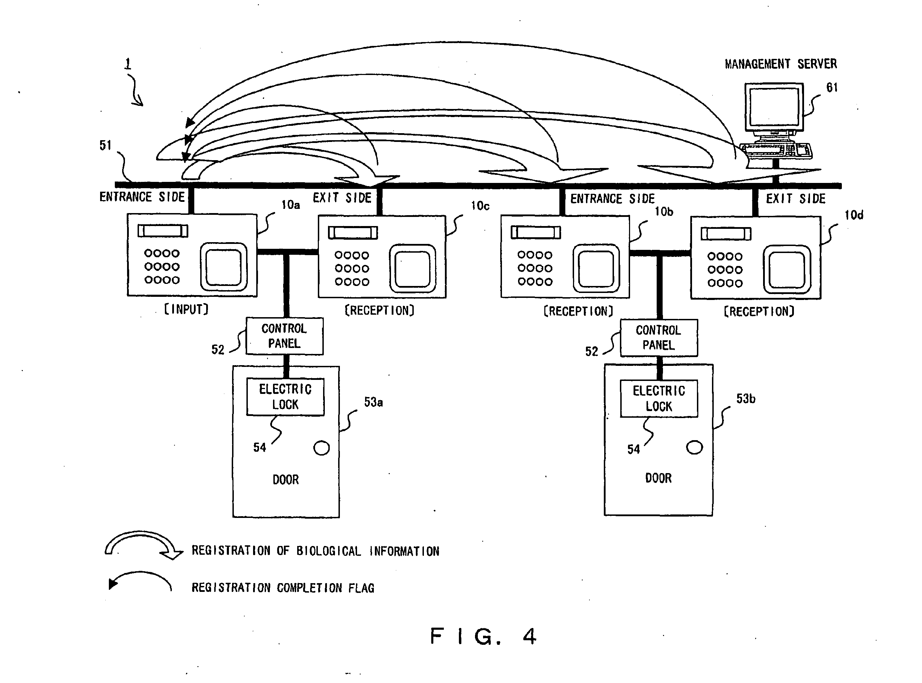

Fig. 4 shows an example of procedures for registering biometric information in the authentication system 1 in an embodiment according to the present invention. In Fig. 4, four authentication devices 10a to 10d are connected with one another via the communication line 51. The authentication devices 10a and 10c respectively correspond to the authentication devices 10 connected to an entrance side and an exit side of a door 53a. The authentication devices 10b and 10d respectively correspond to the authentication devices 10 connected to an entrance side and an exit side of a door 53b.

A management server 61 manages status of the authentication system 1, a log of the authentication system and the like. Specifically, the management server 61 records, for example, who entered/exited a room at what time and via which door and the like by using the notifications from each of the authentication devices 10a to 10d. However, the management server 61 basically does not store the biometric information of each user.

It is assumed that, in the above authentication system 1, a user registers his/her biometric information by using the authentication device 10a. In this case, firstly, the biometric information input by using the authentication device 10a is registered in the storing unit 16 provided to the authentication device 10a itself. Next, the authentication device 10a transmits that registered biometric information to other authentication devices 10b to 10d via the communication line 51. The authentication devices 10b to 10d respectively register the received biometric information in the storing units 16 provided to each of the authentication devices 10b to 10d themselves, and thereafter, return the registration completion flags to the authentication device 10a. Thereby, the same biometric information is registered in the authentication devices 10a to 10d.

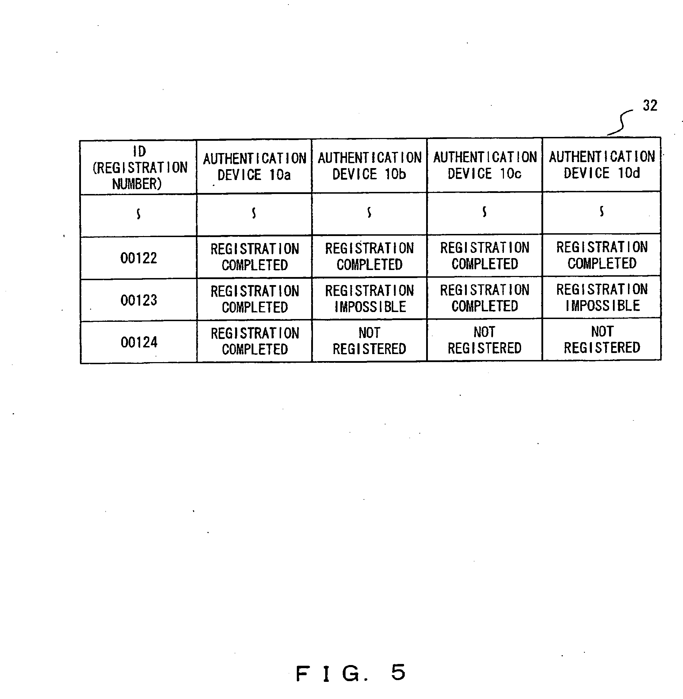

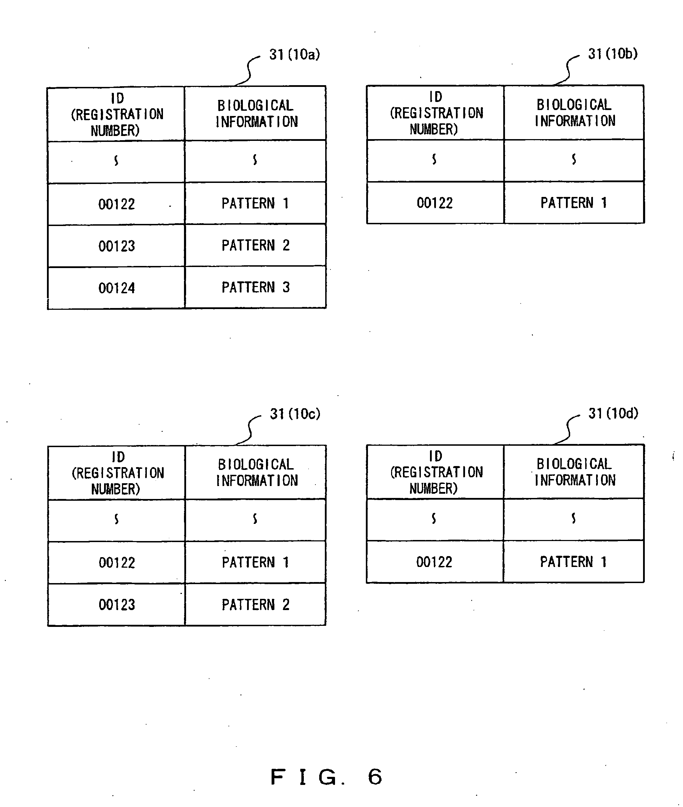

Fig. 5 shows an example of a registrationmanagement table. A registration management table 32 manages whether or not biometric information of each user is registered in each of the authentication devices. Here, the biometric information (pattern 1) of a user identified by registration number 00122 is registered in the authentication devices 10a, 10b, 10c and 10d, as in Fig. 6. The biometric information (pattern 2) of a user identified by registration number 00123 is registered in the authentication devices 10a and 10c. The biometric information (pattern 3) of a user identified by registration number 00124 is registered in the authentication device 10a.

On the registration management table 32, a status "Registration completed" indicates that the biometric information has already been registered in the corresponding authentication device. On the other hand, a status "Not registered" indicates that the biometric information has not been registered yet in the corresponding authentication device. Therefore,in the authentication device on which the status "Not registered" is set, the corresponding biometric information has to be registered. In the example shown in Fig. 5, the biometric information (pattern 3) of a user identified by registration number 00124 has to be registered in the authentication devices 10b, 10c and 10d. Accordingly, in this case, the authentication device 10a in which the biometric information (pattern 3) is registered has to transmit that biometric information (pattern 3) to the authentication devices 10b, 10c and 10d.

A status "Registration impossible" indicates that the corresponding biometric information of the user is not to be registered in the authentication device on which that status "Registration impossible" is set. In the example shown in Fig. 5, it is prohibited that the biometric information (pattern 2) of a user identified by registration number 00123 is registered in the authentication devices 10b and 10d. In this case, the biometric information of this user is neither registered in the authentication devices 10b nor 10d so that this user can neither enter nor exit a room via the door 53b in the access management system shown in Fig. 4. Also, the status "Registration impossible" is set via the management server 61 by an administrator of the access management system, for example.

The registration management tables 32 are respectively prepared in the authentication devices 10 for example. In this case, each registration management table 32 can be created in each storing unit 16. The contents of the respective registration management tables of respective authentication devices 10 can be synchronized with one another. Specifically, when one registration management table 32 is updated in one authentication device 10, the updated content of the registration management table 32 is transmitted to other authentication devices. Thereby, the registration management tables 32 of the respective authentication devices 10 can be synchronized with one anther. The registration management table 32 can be prepared in the management server 61. In this case, although the transmissions of the registrationmanagingtable 32 among the authentication devices are not required, each authentication device has to access to the management server 61 upon the acceptance of input of the new biometric information, transmission of the biometric information to other authentication devices, completion of the transmission of the biometric information, for the registration, and the like.

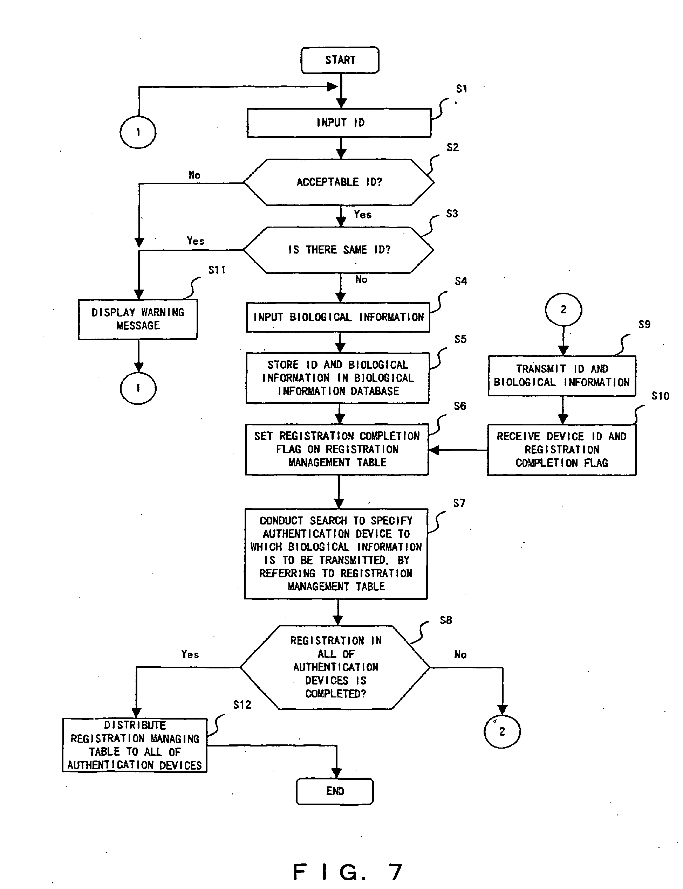

Fig. 7 is a flowchart of procedures for registering biometric information. In Fig. 7, a case that biometric information is transmitted in accordance with the procedures as in Fig. 4 is described. Also, this flowchart describes the operations of the authentication device to which the biometric information is input for registration.

In step S1, a user is required to input a registration number (ID). When the ID is input by the user, it is checked whether or not the input ID is one able to be registered in the authentication device. When an ID which cannot be registered is input (for example, when the unexpected ID for the access management system is input), a warning massage is displayed for requiring the input of the ID again.

In step S3, it is checked whether or not the same ID as the currently input ID has been registered in the biometric information database 31. When there is the same ID with the currently input ID in the database 31, a warning message is displayed for indicating that the biometric information of the currently input registration number has already been registered, in step S11.

In step S4, the user is required to input the biometricinformation. Thereby, the user inputs his/her biometric information. Next, in step S5, the ID obtained in step S1 and the biometric information obtained in step S4 are registered in the biometric information database 31 in a corresponding state to each other. Upon this operation, at least the biometric information is stored in the biometric information database 31 after being encoded by the encoding/decoding unit 18.

In step S6, corresponding registration completion flag is set in the registration management table 32. The example of Fig. 5 shows a state that, upon the registration of the biometric information of a user identified by the registration number 00124 in the authentication device 10a, the corresponding registration completion flag is set.

In steps S7 and S8, a search is conducted in order to specify the authentication devices to which the biometric information obtained in step S4 is to be transmitted, by referring to the registration management table 32. Specifically, a search is conducted in order to specify the authentication device to which the status "Not registered" is set on the newly created record. For example, the authentication devices 10b, 10c and 10d are specified when the biometric information of a user identified by the registration number 00124 is registered in the authentication device 10a in the example of Fig. 5.

When at least one authentication device to which the biometric information is to be transmitted is specified, the ID obtained in step S1 and the biometric information obtained in step S4 are transmitted to one of the above specified authentication devices in step S9. Upon this operation, at least the biometric information is in an encoded state by the encoding/decoding unit 18. Thereby, in the authentication device as the transmission destination, the ID and the biometric information of the user are registered in a corresponding state to each other. Further, the authentication device as the transmission destination returns the registration completion flag together with the device ID of the authentication device. Thereby, in step S10, the device ID of the authentication device as the transmission destination of biometric information and the registration completion flag are received in step S10.

When the device ID and the registration completion flag are received in step S10, the processing returns to step S6 and the corresponding registration completion flag on the registration management table 32 is set in accordance with the above received device ID and registration completion flag. Thereafter, the processes between step S6 and step 10 are repeated until the biometric information is transmitted to all of the authentication devices to which the biometric information is to be transmitted (i.e. until the biometric information is transmitted to all of the authentication devices for which the status "Not registered" is set on the registration management table 32).

When the biometric information is transmitted to all of the authentication devices to which the biometric information is to be transmitted, in step S12, the registration management table 32 updated in step S6 is distributed to all the other authentication devices. Further, "All the other authentication devices" upon the above processing include the authentication devices to which the status "Registration impossible" is set on the registration management table 32. Thereby, all of the authentication devices can have the registration management tables 32 with the same content. In this connection, step S12 is not executed in a case where the registration management table 32 is prepared in the management server 61.

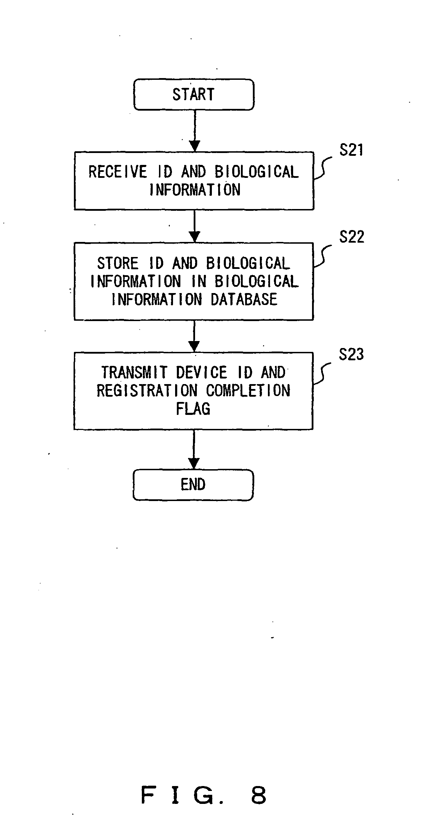

Fig. 8 is a flowchart showing operations of the authentication device when receiving the biometric information from another authentication device whose flowchart is shown in Fig. 7. In step S21, the ID and the biometric information of a user are received via the communication line 51. Next, in step S22, the received ID and biometric information are registered in the biometric information database 31. Then, in step S23, the authentication device which received the biometric information returns, to the transmission source of the biometric information, the device ID of the authentication device itself and the registration completion flag. Thereby, step S10 in Fig. 7 is executed in the authentication device as the transmission source of the biometric information.

As above, in the authentication system 1, when biometric information of a user is registered in any one of the authentication devices, that one authentication device transmits the registered biometric information to one or a plurality of other authentication devices. Upon this operation, the biometric information can be transmitted to all the other authentication devices, or the biometric information can be transmitted only to the prescribed desired authentication devices. Thereby, the biometric information of a user can be registered in all of the authentication devices or in the desired authentication devices.

Further, since only the biometric information newly registered in a authentication device is transmitted from the authentication device to other authentication devices, the amount of transmitted data is small so that the transmission line is not heavily loaded.

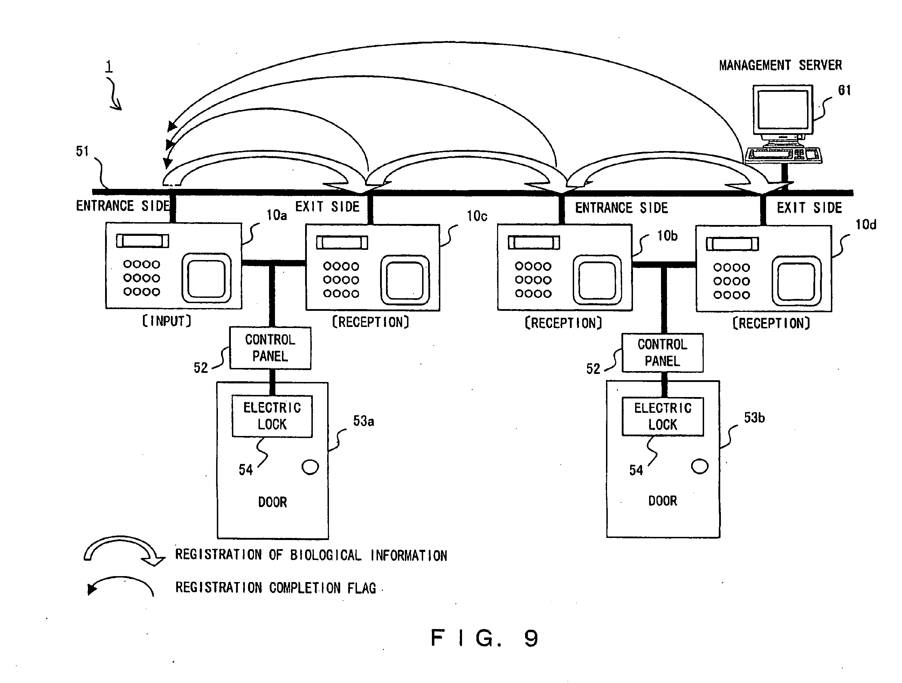

Fig. 9 shows another example of the procedures for registering biometric information. In Fig. 9, the system configuration is the same as the authentication system 1 shown in Fig. 4.

In the procedures shown in Fig. 4, the biometric information input via an arbitrary authentication device (10a) is transmitted to one or a plurality of other authentication devices from the above arbitrary authentication device. To the contrary, in the procedures shown in Fig. 9, the biometric information input via an arbitrary authentication device (10a) is transmitted to a prescribed authentication device (10c) . Thereafter, the biometric information is sequentially transmitted to the subsequent authentication devices (10b, 10d) in a one by one manner. Further, each authentication device registers, in the biometric information database 31 in the authentication device itself, the biometric information received from the previous authentication device. Upon these operations, each authentication device returns the registration completion flag to the authentication device to which the biometric information was first input (the authentication device 10a in Fig. 9, whichmay be referred to as "original authentication device" hereinafter). Thanks to these procedures, the load on the original authentication device is lightened.

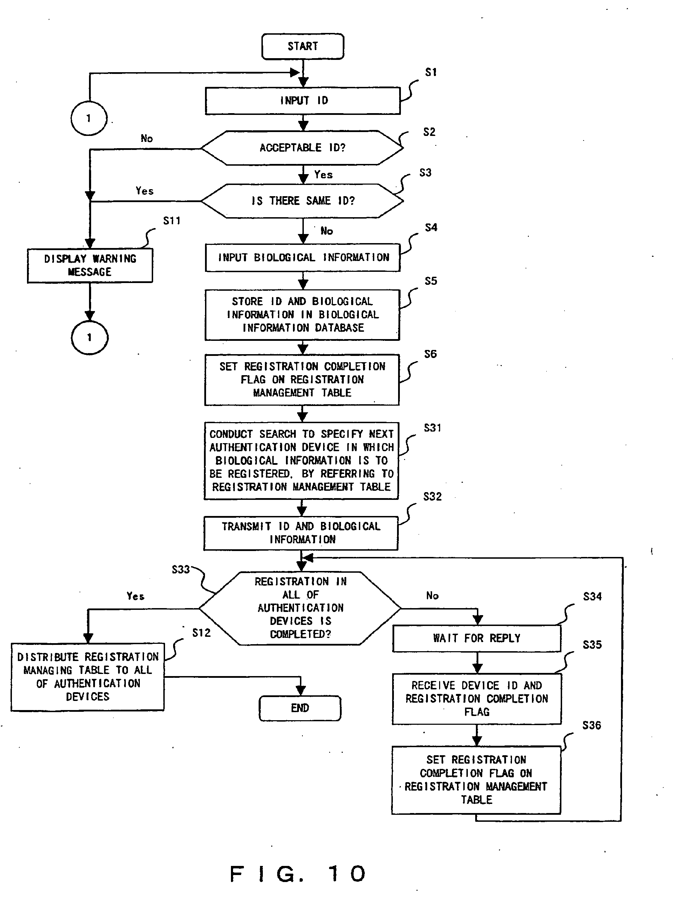

Fig. 10 is a flowchart showing the operations of the authentication device to which biometric information is input (the original authentication device) in the procedures shown in Fig. 9. Here, the processes of steps S1 to S6, S11 and S12 are the same with the processes explained referring to Fig. 7. In other words, when the ID and biometric information of a user are input, the ID and the biometric information are registered in the biometric information database 31.

In step S31, a search is conducted in order to specify the next authentication device in which the biometric information is to be registered, by referring to the registration management table 32. In this example, the registration order or transmission order of the biometric information (for example, the order of the authentication devices 10a, 10c, 10b and 10d) is prescribed in advance, and the order of the registration can be obtained by referring to the registration management table 32. In step S32, the ID obtained in step S1 and the biometric information obtained in step S4 are transmitted to the authentication device specified by the above search.

In steps S33 to S36, it is confirmed that the registration processes are completed in all of the authentication devices (or in the authentication devices prescribedinadvance). Specifically, the registration management table 32 is updated each time the registration completion flag is received from other authentication device, and when the registration completion flags of all of the authentication devices are set, the registration processes are completed.

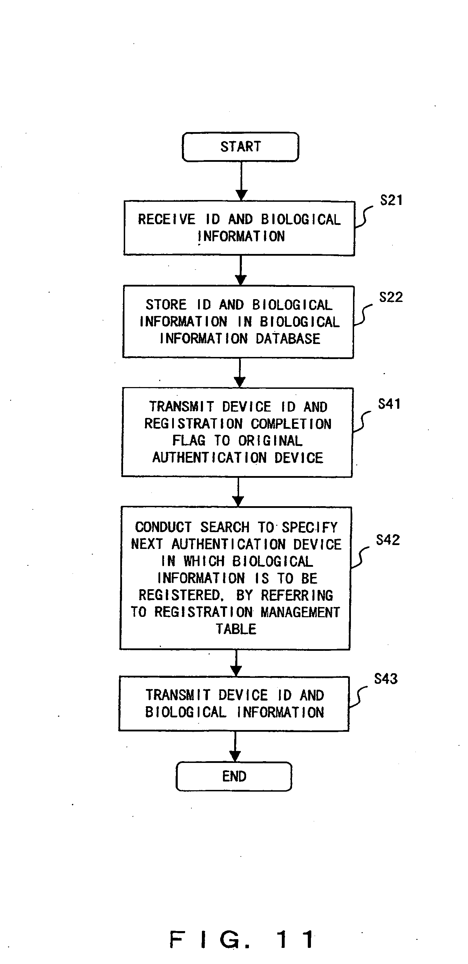

Fig. 11 is a flowchart showing the operations of the authentication device which receives the biometric information from a previous authentication device in the sequence shown in Fig. 9. In steps S21 and S22, as explained by referring to Fig. 8, the ID and the biometric information received via the communication line 51 are registered in the biometric information database 31. Thereafter, the authentication device transmits to the original authentication device the device ID of the authentication device itself and the registration completion flag. Thereby, the steps S35 and S36 shown in Fig. 10 are executed in the original authentication device.

In step S42, a search is conducted in order to specify the next authentication device in which the biometric information is to be registered, by referring to the registration management table 32. In step S43, the ID and the biometric information stored in the biometric information database 31 are transmitted to the authentication device specified by the above search.

As described above, each authentication device except for the original authentication device registers, in the authentication device itself, the biometric information received from the previous authentication device and also, transmits the received biometric information to the following authentication device. Thereby, the biometric information of a user is registered in each authentication device.

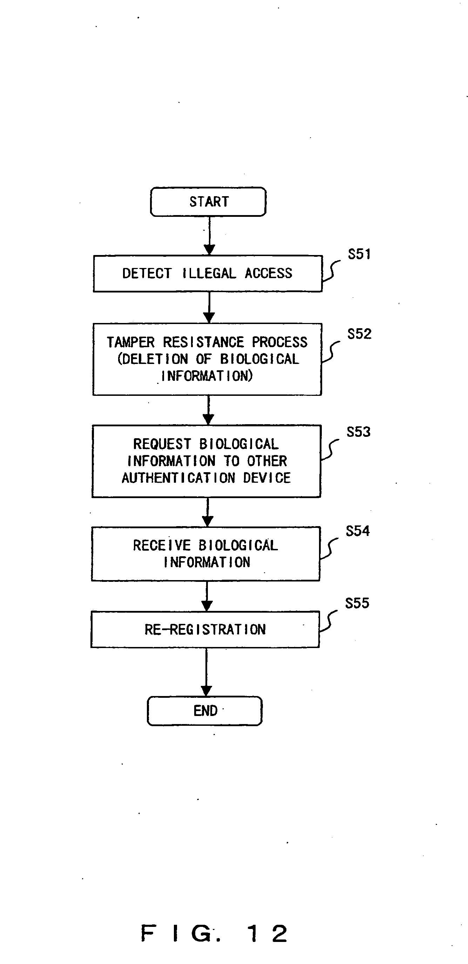

Fig. 12 is a flowchart showing re-registration processes executed in association with a tamper resistance process. The tamper resistance process is for protecting the information from illegal accesses, which is executed by the tamper resisting unit 19.

When an illegal access is detected in step S51, steps S52 to S55 are executed. The examples of the "illegal access" include an illegal read, write, and manipulation of the biometric information stored in the storing unit 16 or the like, and an illegal access to the control panel 52 and the electric lock 54 operating in association with the authentication device 10.

In step S52, the biometric information stored in the storing unit 16 is forcibly deleted by the tamper resisting unit 19. In step S53, the authentication device requests the biometric information from other authentication device. Here, although it is not particularly limited to which authentication device the request message is transmitted, a request message can be transmitted to an authentication device which is prescribed, among the plurality of the authentication devices, as a main authentication device in advance. It is desirable that the request message is transmitted after the completion of the recovery process from the illegal access. Further, a message indicating that the tamper resistance process is executed may be notified to all of the authentication devices prior to the transmission of the above request message. Further, upon reception of the above request message, the authentication device transmits the biometric information corresponding to the request message in return.

In step S54, the biometric information transmitted from the other authentication device is received. Thereafter, in step S55, the received biometric information is re-registered in the storing unit 16.

As above, in the authentication system according to the present invention, when biometric information is deleted in one authentication device due to an illegal access, the authentication device can automatically obtain the biometric information corresponding to the deleted information from another authentication device in order to re-register the obtained biometric information therein. Thereby, an easier maintenance of the system is realized.

In a system in which the biometric information is exclusively managed by a server, an illegal access to the server causes a suspension of the operations of the whole authentication system. For example, in a case where the authentication system is applied to an access management system, a control for opening/closing of any of the doors can not be conducted. To the contrary, in the authentication system 1 according to the present invention, the operation only of the authentication device that is subjected to the illegal access is suspended so that the other authentication devices are not influenced. Therefore, the convenience of the authentication system is enhanced.

In the above example, procedures of requesting biometric information to other authentication device after the execution of the tamper resistance process are described. However the scope of the present invention is not limited to the above example. In other words, for example, the biometric information can be requested from another authentication device after deletion of the biometric information due to other reasons. Or the biometric information can be periodically requested regardless of the deletion of biometric information, for example.

In the above embodiment, when biometric information of a user is registered in one authentication device, the biometric information is instantaneously transmitted to other authentication devices. However, the scope of the present invention is not limited to this embodiment. For example, a plurality of the authentication devices belonging to the authentication system can be grouped into two or more groups so that the transmissions are respectively conducted with different timings for respective groups.

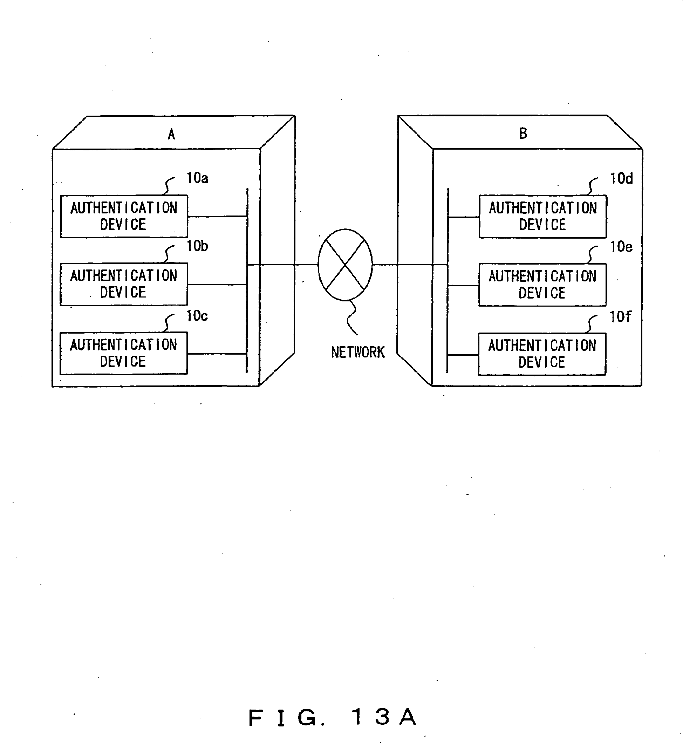

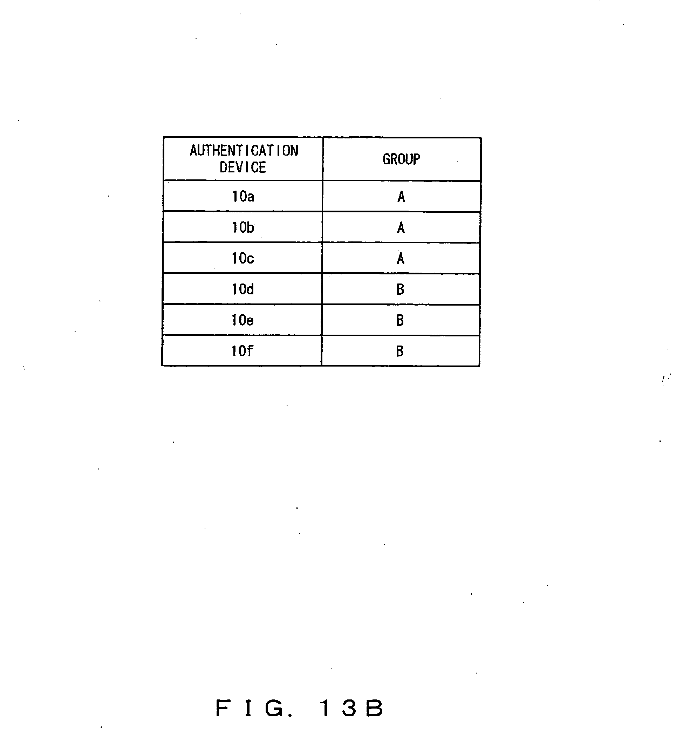

In an example of Fig. 13A, the authentication system 1 comprises six authentication devices 10a to 10f. The authentication devices 10a to 10c are provided in a building-A and the authentication devices 10d to 10f are provided in a building-B. In such a case, the authentication devices 10a to 10f are grouped in accordance with the locations of the provisions of the authentication devices. Specifically, the authentication devices 10a to 10f are registered in a group management table 33 in a manner as shown in Fig. 13B.

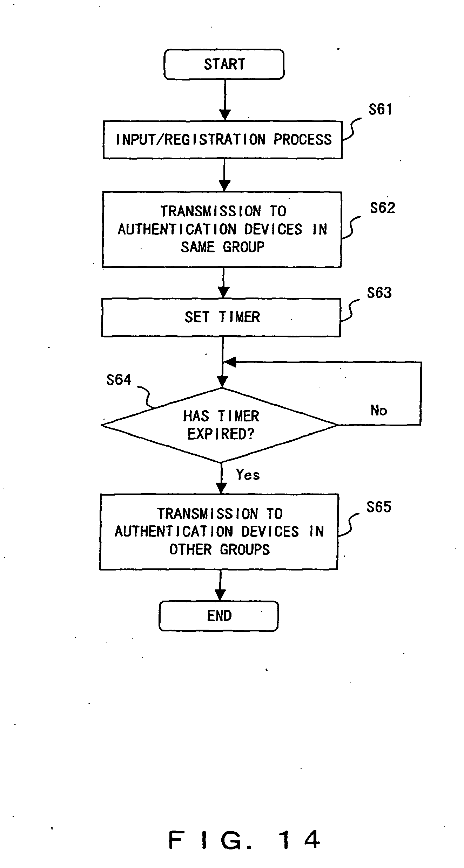

Fig. 14 is a flowchart showing processes of transmitting biometric information, taking into account the division of the authentication devices into groups. In step S61, the biometric information input by a user is registered. Incidentally, this process corresponds to steps S1 to S6 shown in Fig. 7, for example. In step S62, the authentication device in which biometric information is newly registered transmits the biometric information to other authentication devices belonging to the same group. Upon this operation, other authentication devices belonging to the same group are detected by referring to the group management table 33 shown in Fig. 13B. Then, by referring to the registration management table 32, the transmissions of the biometric information are sequentially conducted to the authentication devices to which the status "Not registered" is set. For example, in a case where biometric information is input in the authentication device 10a shown in Fig. 13A, the biometric information is transmitted from the authentication device 10a to the authentication devices 10b and 10c.

In steps S63 and S64, a timer is set. This timer is set to monitor the prescribed time and date at which the use frequency of the authentication devices are low (for example, at 0: 00 am of the next day), although the set time is not particularly limited to the above time. When the timer expires, in step S65, the biometric information is transmitted to authentication devices belonging to other groups by referring to the group management table 33.

According to the above procedures, transmission of biometric information to authentication devices which are likely to need the information soon can be instantaneously conducted, and the transmission to the authentication devices less likely to need the information soon can be conducted during a time period in which there is little traffic on the communication line (network). Therefore, a congestion of the communication line can be avoided without lowering the convenience for users.

It is to be noted that although in the above embodiment, the biometric information input in one arbitrary authentication device among a plurality of authentication devices is transmitted to other authentication devices, the scope of the present invention is not limited to this configuration. In other words, the authentication system 1 involves these features:
(1) biometric information of a user is registered in each of authentication devices instead of being exclusively managed by a server,
(2) biometric information is registered in a plurality of authentication devices by one inputting operation, and
(3) biometric information is not transmitted via a communication line upon identity verification of a user.

Accordingly, from the above, it is obvious that the scope of the present invention does not exclude a configuration in which biometric information, input to a device which is not an authentication device is transmitted to a plurality of authentication devices upon the registration of the above input biometric information.

## Claims

1. An authentication system comprising a plurality of authentication devices (10a, 10b), wherein each of the authentication devices comprises:
an obtaining unit (11) for obtaining biometric information by input thereof;
a registering unit (16) for registering the biometric information obtained by said obtaining unit;
an authenticating unit (17) for authenticating an individual person by utilizing the biometric information registered in said registering unit;
a receiving unit (14) for receiving biometric information input in another authentication device; and
a transmitting unit (14) for transmitting the biometric information; **characterised in that**
said transmitting unit (14) is arranged for transmitting the biometric information obtained by said obtaining unit or received by said receiving unit to another of said plurality of authentication devices, the transmitting unit transmitting the received biometric information to the next authentication device sequentially; whereby
the biometric information input into any of the authentication devices is registered in all of the authentication devices or in all of a prescribed subset of the plurality of the authentication devices.

2. The authentication system according to claim 1, wherein said obtaining unit is a biometric information sensor.

3. The authentication system according to claim 1, or 2, further comprising a registration admittance/exclusion setting unit for setting the admittance/exclusion of registration of biometric information for each of the authentication devices and also for each of persons using the system, wherein
said transmitting unit transmits biometric information only to the authentication devices which have gained admittance by said registration admittance/exclusion setting unit.

4. The authentication system according to claim 1, 2, or 3, further comprising a grouping unit for grouping the plurality of the authentication devices into a plurality of groups including a first group and a second group, wherein
the transmitting units of the authentication devices belonging to the first group, when said obtaining unit of one of the authentication devices obtains biometric information, transmit the biometric information to the other authentication devices belonging to the first group, and transmit the biometric information to authentication devices belonging to the second group when a prescribed timing comes.

5. The authentication system according to any preceding claim, wherein each of the authentication devices further comprises a requesting unit for requesting biometric information from another authentication device.

6. The authentication system according to any preceding claim, wherein each of the authentication devices further comprises:
a tamper resisting unit (19) for deleting biometric information registered in said registering unit when there occurs an illegal access to the authentication device or to a device operating in association with the authentication device; and
a requesting unit for requesting biometric information from other authentication device after the biometric information registered in said registering unit is deleted by said tamper resisting unit.

7. A method of registering biometric information, in an authentication system comprising a plurality of authentication devices, comprising:
a first step of registering biometric information in a first authentication device among the plurality of the authentication devices;
a second step of transmitting the biometric information registered in the first authentication device from the first authentication device to a second authentication device among the plurality of the authentication devices; and
a third step of registering, in the second authentication device, the biometric information transmitted from the first authentication device,
wherein;
the second step and the third step are repeated sequentially with different ones of the authentication devices until the biometric information is registered in all of the authentication devices or in all of a prescribed subset of the plurality of the authentication devices.

## Patentansprüche

1. Authentifizierungssystem mit einer Vielzahl von Authentifizierungsvorrichtungen (10a, 10b), bei dem jede der Authentifizierungsvorrichtungen umfasst:
eine Erlangungseinheit (11) zum Erlangen von biometrischen Informationen durch deren Eingabe;
eine Registrierungseinheit (16) zum Registrieren der durch die Erlangungseinheit erlangten biometrischen Informationen;
eine Authentifizierungseinheit (17) zum Authentifizieren einer individuellen Person, indem die in der Registrierungseinheit registrierten biometrischen Informationen genutzt werden;
eine Empfangseinheit (14) zum Empfangen von biometrischen Informationen, die einer anderen Authentifizierungsvorrichtung eingegeben wurden; und
eine Sendeeinheit (14) zum Senden der biometrischen Informationen; **dadurch gekennzeichnet, dass**
die Sendeeinheit (14) zum Senden der biometrischen Informationen, die durch die Erlangungseinheit erlangt wurden oder durch die Empfangseinheit empfangen wurden, an eine andere von der Vielzahl von Authentifizierungsvorrichtungen angeordnet ist, wobei die Sendeeinheit die empfangenen biometrischen Informationen an die nächste Authentifizierungsvorrichtung sequentiell sendet; wodurch
die biometrischen Informationen, die irgendeiner der Authentifizierungsvorrichtungen eingegeben wurden, in allen Authentifizierungsvorrichtungen oder in allen von einer vorgeschriebenen Teilmenge von der Vielzahl der Authentifizierungsvorrichtungen registriert werden.

2. Authentifizierungssystem nach Anspruch 1, bei dem die Erlangungseinheit ein Sensor für biometrische Informationen ist.

3. Authentifizierungssystem nach Anspruch 1 oder 2, ferner mit einer Registrierungszulassungs-/-ausschluss-Einstelleinheit zum Einstellen der Zulassung/des Ausschlusses der Registrierung biometrischer Informationen für jede der Authentifizierungsvorrichtungen und auch für jede der Personen, die das System verwenden, bei dem
die Sendeeinheit biometrische Informationen nur an die Authentifizierungsvorrichtungen sendet, die die Zulassung durch die Registrierungszulassungs-/-ausschluss-Einstelleinheit erhalten haben.

4. Authentifizierungssystem nach Anspruch 1, 2 oder 3, ferner mit einer Gruppierungseinheit zum Gruppieren der Vielzahl der Authentifizierungsvorrichtungen in eine Vielzahl von Gruppen, die eine erste Gruppe und eine zweite Gruppe enthalten, bei dem
die Sendeeinheiten der Authentifizierungsvorrichtungen, die zu der ersten Gruppe gehören, dann, wenn die Erlangungseinheit von einer der Authentifizierungsvorrichtungen biometrische Informationen erlangt, die biometrischen Informationen an die anderen Authentifizierungsvorrichtungen sendet, die zu der ersten Gruppe gehören, und die biometrischen Informationen an Authentifizierungsvorrichtungen sendet, die zu der zweiten Gruppe gehören, wenn ein vorgeschriebener Zeitpunkt eintritt.

5. Authentifizierungssystem nach einem vorhergehenden Anspruch, bei dem jede der Authentifizierungsvorrichtungen ferner eine Anforderungseinheit zum Anfordern von biometrischen Informationen von einer anderen Authentifizierungsvorrichtung umfasst.

6. Authentifizierungssystem nach einem vorhergehenden Anspruch, bei dem jede der Authentifizierungsvorrichtungen ferner umfasst:
eine manipulierungsresistente Einheit (19) zum Löschen von biometrischen Informationen, die in der Registrierungseinheit registriert sind, wenn ein illegaler Zugriff auf die Authentifizierungsvorrichtung oder auf eine Vorrichtung auftritt, die mit der Authentifizierungsvorrichtung zusammenarbeitet; und
eine Anforderungseinheit zum Anfordern von biometrischen Informationen von einer anderen Authentifizierungsvorrichtung, nachdem die in der Registrierungseinheit registrierten biometrischen Informationen durch die manipulierungsresistente Einheit gelöscht sind.

7. Verfahren zum Registrieren von biometrischen Informationen in einem Authentifizierungssystem, das eine Vielzahl von Authentifizierungsvorrichtungen umfasst, mit:
einem ersten Schritt zum Registrieren von biometrischen Informationen in einer ersten Authentifizierungsvorrichtung von der Vielzahl der Authentifizierungsvorrichtungen;
einem zweiten Schritt zum Senden der biometrischen Informationen, die in der ersten Authenrifizierungsvorrichtung registriert sind, von der ersten Authentifizierungsvorrichtung an eine zweite Authentifizierungsvorrichtung von der Vielzahl der Authentifizierungsvorrichtungen; und
einem dritten Schritt zum Registrieren, in der zweiten Authentifizierungsvorrichtung, der biometrischen Informationen, die von der ersten Authentifizierungsvorrichtung gesendet wurden, bei dem
der zweite Schritt und der dritte Schritt mit verschiedenen der Authentifizierungsvorrichtungen sequentiell wiederholt werden, bis die biometrischen Informationen in allen Authentifizierungsvorrichtungen oder in allen von einer vorgeschriebenen Teilmenge von der Vielzahl der Authentifizierungsvorrichtungen registriert sind.

## Revendications

1. Système d'authentification comportant une pluralité de dispositifs d'authentification (10a, 10b), dans lequel chacun des dispositifs d'authentification comprend :
une unité d'obtention (11) pour obtenir des informations biométriques grâce à l'entrée de celle-ci ;
une unité d'enregistrement (16) pour enregistrer les informations biométriques obtenues par ladite unité d'obtention ;
une unité d'authentification (17) pour authentifier une personne individuelle en utilisant les informations biométriques enregistrées dans ladite unité d'enregistrement ;
une unité de réception (14) pour recevoir les informations biométriques entrées dans un autre dispositif d'authentification ; et
une unité de transmission (14) pour transmettre les informations biométriques ; **caractérisé en ce que**
ladite unité de transmission (14) est disposée pour transmettre les informations biométriques, obtenues par ladite unité d'obtention ou reçue par ladite unité de réception à un autre de ladite pluralité de dispositifs d'authentification, l'unité de transmission transmettant séquentiellement les informations biométriques reçues au dispositif d'authentification suivant ; moyennant quoi
les informations biométriques entrées dans l'un quelconque des dispositifs d'authentification sont enregistrées dans tous les dispositifs d'authentification ou dans tous les dispositifs d'un sous-ensemble prescrit de la pluralité de dispositifs d'authentification.

2. Système d'authentification selon la revendication 1, dans lequel ladite unité d'obtention est un capteur d'informations biométriques.

3. Système d'authentification selon la revendication 1, ou 2, comportant en outre une unité de détermination d'admission/exclusion d'enregistrement pour déterminer l'admission/exclusion de l'enregistrement d'informations biométriques pour chacun des dispositifs d'authentification et également pour chacune des personnes en utilisant le système, dans lequel
ladite unité de transmission transmet des informations biométriques uniquement aux dispositifs d'authentification qui ont obtenu l'admission par ladite unité de détermination d'admission/exclusion d'enregistrement.

4. Système d'authentification selon la revendication 1, 2, ou 3, comportant en outre une unité de groupement pour grouper la pluralité de dispositifs d'authentification en une pluralité de groupes comprenant un premier groupe et un second groupe, dans lequel
les unités de transmission des dispositifs d'authentification appartenant au premier groupe, lorsque ladite unité d'obtention de l'un des dispositifs d'authentification obtient des informations biométriques, transmet les informations biométriques aux autres dispositifs d'authentification appartenant au premier groupe, et transmet les informations biométriques aux dispositifs d'authentification appartenant au second groupe lorsqu'un moment prescrit arrive.

5. Système d'authentification selon l'une quelconque des revendications précédentes, dans lequel chacun des dispositifs d'authentification comporte en outre une unité de requête pour demander des informations biométriques depuis un autre dispositif d'authentification.

6. Système d'authentification selon l'une quelconque des revendications précédentes, dans lequel chacun des dispositifs d'authentification comporte en outre :
une unité inviolable (19) pour effacer les informations biométriques enregistrées dans ladite unité d'enregistrement lorsqu'il se produit un accès illégal au dispositif d'authentification ou à un dispositif fonctionnant conjointement avec le dispositif d'authentification ; et
une unité de requête pour demander des informations biométriques depuis un autre dispositif d'authentification après que les informations biométriques enregistrées dans ladite unité d'enregistrement ont été supprimées par ladite unité inviolable.

7. Procédé d'enregistrement d'informations biométriques, dans un système d'authentification comportant une pluralité de dispositifs d'authentification, comportant:
une première étape d'enregistrement d'informations biométriques dans un premier dispositif d'authentification parmi la pluralité de dispositifs d'authentification ;
une seconde étape de transmission des informations biométriques enregistrées dans le premier dispositif d'authentification à partir du premier dispositif d'authentification vers un second dispositif d'authentification parmi la pluralité de dispositifs d'authentification ; et
une troisième étape d'enregistrement, dans le second dispositif d'authentification, des informations biométriques transmises depuis le premier dispositif d'authentification, dans lequel ;
la seconde étape et la troisième étape sont répétées séquentiellement avec des dispositifs différents parmi les dispositifs d'authentification jusqu'à ce que les informations biométriques soient enregistrées dans tous les dispositifs d'authentification ou dans tous les dispositifs d'un sous-ensemble prescrit de la pluralité de dispositifs d'authentification.
